# EUROPÄISCHE PATENTSCHRIFT

(11) **EP 3 847 081 B1**
(45) Veröffentlichungstag und Bekanntmachung des Hinweises auf die Patenterteilung: **29.06.2022**
(21) Anmeldenummer: 19758349.5
(22) Anmeldetag: 12.08.2019
(51) Int. Cl.: B60R 16/02, B62D 21/17

(54) **STRUKTURELEMENT FÜR EIN KRAFTFAHRZEUG UND VERFAHREN ZUM HERSTELLEN EINES STRUKTURELEMENTS**
STRUCTURAL ELEMENT FOR A MOTOR VEHICLE AND METHOD FOR PRODUCING A STRUCTURAL ELEMENT
ÉLÉMENT STRUCTURAL POUR UN VÉHICULE AUTOMOBILE ET PROCÉDÉ DE FABRICATION D'UN ÉLÉMENT STRUCTURAL

(30) Priorität: 07.09.2018 DE 102018121882
(43) Veröffentlichungstag der Anmeldung: 14.07.2021
(73) Patentinhaber: Auto-Kabel Management GmbH, 79688 Hausen i.W. (DE)
(72) Erfinder: RÖSCH, Markus, 55120 Mainz (DE)
(74) Vertreter: Cohausz & Florack
(86) Internationale Anmeldenummer: PCT/EP2019/071551
(87) Internationale Veröffentlichungsnummer: WO 2020/048736

(56) Entgegenhaltungen:
- EP-A1- 3 366 553
- WO-A2-2012/164210
- DE-A1-102013 101 801

## Beschreibung

Der Gegenstand betrifft ein Kraftfahrzeugstrukturelement sowie ein Verfahren zum Herstellen eines solchen Kraftfahrzeugstrukturelements. Gegenständliche Kraftfahrzeugstrukturelemente sind insbesondere Rahmenteile für ein Chassis oder eine Fahrgastzelle eines Kraftfahrzeugs. Dabei können die Strukturelemente insbesondere tragende Teile, insbesondere Teile eines Tragrahmens eines Kraftfahrzeugs sein. Ferner können Strukturelemente Anbauteile an einem Tragrahmen sowie Chassisteile und Fahrgastzellenteile sein. Insbesondere können Strukturelemente bodenseitige Strukturelemente sein, insbesondere im Bereich einer Bodenwanne oder die Bodenwanne selbst.

Der Einsatz von Faserverbundwerkstoffen, insbesondere faserverstärkten Kunststoffen, gewinnt zunehmend Bedeutung im Automobilbau aufgrund ihres Leichtbaupotentials. Durch gestiegene Anforderungen an einen optimierten Verbrauch suchen Fahrzeughersteller nach immer weiteren Möglichkeiten, das Gewicht von Fahrzeugen einzugrenzen, um insbesondere CO₂ Einsparpotentiale zu heben.

Darüber hinaus bieten faserverstärkte Kunststoffe die Möglichkeit, das Werkstoffverhalten richtungsabhängig zu gestalten, insbesondere durch Ausrichtung der Faser in Quer- oder Längsrichtung. Hierdurch können insbesondere tragende Strukturen von Kraftfahrzeugen hinsichtlich ihrer richtungsspezifischen Tragfähigkeit optimiert werden.

Nachteilig an der Verwendung von faserverstärkten Kunststoffen ist jedoch deren nicht vorhandene elektrische Leitfähigkeit. Im Gegensatz zu bisherigen Kraftfahrzeugen, in denen die Tragstrukturen durch Bleche oder Rohre aus Stahl oder Aluminiumwerkstoff gebildet wurden, die elektrisch leitfähig sind, ist eine solche Leitfähigkeit bei faserverstärkten Kunststoffen nicht mehr gegeben. Dies erfordert bei der Verwendung von faserverstärkten Kunststoffen gegenüber herkömmlichen Blechkarosserien neuartige Leiterkonzepte. Insbesondere das gesamte Fahrzeug abdeckende Leiterkonzepte, beispielsweise auch zur Verteilung eines Batteriemassepotentials, müssen neu konzipiert werden.

Die Veröffentlichung WO 2012/164210 A2 bezieht sich auf das Gebiet der Verbundwerkstoffe, insbesondere auf Werkstoffe mit Kohlenstofffasern.

Zur Verteilung elektrischer Leistung in Karossen mit faserverstärkten Kunststoffen sind bereits Lösungen bekannt. So zeigt beispielweise die DE 10 2013 101801 A1 ein Strukturelement mit einer Leitungsanordnung. Die Leitungsanordnung ist zwischen den Faserschichten einlaminiert und ermöglicht die Potentialverteilung innerhalb eines Fahrzeugs. Insbesondere die Verwendung von Flachleitern, wie sie in der DE 10 2013 101801 A1 auch vorgeschlagen wird, birgt jedoch das Risiko der Delaminierung. Aufgrund der glatten Oberflächen eines herkömmlichen Flachleiters, der zwischen den Faserschichten eingelegt wird, kann es im Betrieb zur Ablösung des Leiters von den Faserschichten kommen. Diese Delaminierung ist in mehrerlei Hinsicht problematisch. Insbesondere kann durch die Delaminierung die Struktur und Tragfähigkeit des Strukturelements negativ beeinträchtigt werden. Außerdem ist es möglich, dass in Bereichen einer Delaminierung Feuchtigkeit eindringt und so zu einer verstärkten Korrosion des Leiters beitragen kann.

Vor diesem Hintergrund lag dem Gegenstand die Aufgabe zugrunde, ein Kraftfahrzeugstrukturelement aus einem Faserverbundwerkstoff zur Verfügung zu stellen, welches eine langlebige Potentialverteilung innerhalb eines Kraftfahrzeugs ermöglicht.

Diese Aufgabe wird gegenständlich durch ein Kraftfahrzeugstrukturelement nach Anspruch 1 gelöst.

Das gegenständliche Kraftfahrzeugstrukturelement kann insbesondere als tragende Struktur eines Kraftfahrzeugs, beispielsweise ein Kraftfahrzeugrahmen oder ein Teil einer Fahrgastzelle sein. Auch Anbauteile können als gegenständliches Strukturelement gebildet sein. Beispielsweise Türen, Abdeckhauben, Kot- und/oder Frontflügel, Bodengruppen, Tragrahmen oder dergleichen können gegenständliche Strukturelemente sein.

Das gegenständliche Kraftfahrzeugstrukturelement ist eine laminierte Faser-Verbundstruktur. Diese verfügt über zumindest eine erste und zumindest eine zweite Faserschicht. Diese beiden Faserschichten sind miteinander zumindest teilweise laminiert. Durch das Laminieren bilden die Faserschichten einen im Wesentlichen starren Faserverbund und geben somit dem Strukturelement seine räumlichkörperliche Struktur.

Die Ausrichtung der Fasern relativ zu einander als auch die Ausrichtung der Fasern innerhalb des Strukturelementes ermöglicht es, das Strukturelement hinsichtlich seiner Biegeeigenschaften als auch seiner Brucheigenschaften an den Anwendungszweck anzupassen.

Um eine elektrische Leitung innerhalb des Fahrzeugs zu ermöglichen, verläuft zwischen den zumindest zwei Faserschichten ein elektrischer Flachleiter. Ein elektrischer Flachleiter ist dabei insbesondere ein aus einem Vollmaterial gebildeter Leiter mit einem bevorzugt rechteckigen Leiterquerschnitt. Der Flachleiter hat bevorzugt einen Mindestleiterquerschnitt von 16mm². Der Flachleiter ist insbesondere biegesteif und trägt sich selbst. Am Flachleiter treten keine wesentlichen elastischen Verformungen verursacht durch sein Eigengewicht auf. Der Flachleiter ist ausgelegt, Ströme von mehr als 10 A, bevorzugt mehr als 50 A, insbesondere mehr als 100 A zu tragen. Der Flachleiter ist somit ein Energieleiter im Gegensatz zu einem Folienleiter, bei dem zwischen zwei Folien eine leitende Metallfolie eingebracht ist.

Um zu verhindern, dass nach der Fertigung das Strukturelement im Bereich des Flachleiters delaminiert, wird vorgeschlagen, dass der Flachleiter auf zumindest einer zumindest einer Faserschicht der zugewandten Oberfläche eine Reliefstruktur aufweist. Hierbei ist die Oberfläche des Flachleiters gezielt aufgeraut und/oder profiliert, sodass sich die Reliefstruktur bildet. Durch die Reliefstruktur kommt es zu einem besseren Formschluss zwischen dem Flachleiter und den Faserschichten bzw. dem die Faserschichten verbindenden Verbundwerkstoff. Die Fasern bzw. die Faserschichten haften somit besser an dem Flachleiter und selbst bei einer mechanischen Beanspruchung kommt es nicht zu einer Delamination des Flachleiters von zumindest einer der Faserschichten.

Die Reliefstruktur ist insbesondere derart, dass sie Hinterschnitte an der Oberfläche des Flachleiters bildet. Dabei kann die Reliefstruktur die Oberfläche so verändern, dass an der Oberfläche Ausnehmungen sind, die mit größerer Eindringtiefe eine größere Fläche aufweisen und/oder deren Volumen überproportional zur Eindringtiefe anwächst. Die Hinterschnitte können regelmäßig und/oder unregelmäßig sein. Das Verbundmaterial dringt in die Ausnehmungen und mithin die Hinterschnitte ein, härtet aus und verzahnt sich mit den Hinterschnitten.

Die Reliefstruktur ist insbesondere derart, dass sie eine Oberflächenporosität des Flachleiters bildet. Der Flachleiter kann an seiner Oberfläche mit einer Eindringtiefe zwischen 0 und 10mm, bevorzugt auch 20mm, insbesondere weniger als 20% der Gesamtdicke des Flachleiters, eine Porosität zwischen 5% und 50% aufweisen. Die Porosität ist dabei bevorzugt eine offene Porosität. Die Porosität ist insbesondere eine Makroporosität mit Porengrößen von mehr als 50nm.

Gemäß einem Ausführungsbeispiel wird vorgeschlagen, dass die Reliefstruktur regelmäßig oder unregelmäßig ist. Eine regelmäßige Reliefstruktur kann beispielsweise durch einen Laser eingebracht werden. Auch ist es möglich, dass durch spanloses Umformen die Reliefstruktur eingebracht wird, beispielsweise durch Walzen, Rollen, Stanzen, Pressen oder dergleichen. Die Reliefstruktur kann dabei gitterförmig oder streifenförmig sein, wobei eine Gitterform beispielsweise dreieckig, viereckig, sechseckig sowie auch runde oder ovale Gitterstrukturen aufweisen kann.

Die Reliefstruktur kann durch Laserbearbeitung eingebracht werden. Durch geeignete profilierte Walzen mit einem Positivprofil kann eine regelmäßige Reliefstruktur eingebracht werden. Eine unregelmäßige Reliefstruktur kann durch Aufrauen, Sputtern oder dergleichen eingebracht werden.

Die Reliefstruktur kann gemäß einem Ausführungsbeispiel aus Vorsprüngen und/oder Rücksprüngen auf zumindest einer Oberfläche des Flachleiters gebildet sein. Der Flachleiter kann insbesondere einen quadratischen oder rechteckigen Querschnitt aufweisen. Im letzteren Fall hat der Flachleiter zwei breite Oberflächen und zwei schmale Oberflächen, die jeweils einander gegenüber liegen. Im ersteren Fall hat der Flachleiter vier gleiche, einander gegenüber liegende Oberflächen. Der Flachleiter hat darüber hinaus an den jeweiligen Enden jeweils zwei einander gegenüber liegende Stirnflächen. Die Vorsprünge und/oder Rücksprünge können auf zwei einander gegenüber liegenden Oberflächen oder auch auf nur einer Oberfläche oder auf allen Oberflächen, mit Ausnahme der Stirnflächen aufgebracht sein.

Auch ist es möglich, dass die Reliefstruktur aus den Flachleiter durchbrechenden Ausnehmungen gebildet ist. Hier ist insbesondere eine Gitterstruktur denkbar, bei der Öffnungen in dem Flachleiter durch die Ausnehmungen gebildet sind, in welche der Verbundwerkstoff eindringen kann, was einen hervorragenden Formschluss zwischen Flachleiter und Verbundmaterial bewirkt.

In diesem Zusammenhang wird insbesondere bevorzugt, dass der Flachleiter als Gitternetz gebildet ist. Das Gitter kann regelmäßig oder unregelmäßig sein. Das Gitter kann eine runde, insbesondere kreisförmige oder ovale Gitterstruktur als auch eine eckige Gitterstruktur, beispielsweise dreieckig, viereckig, sechseckig, achteckig oder dergleichen aufweisen. Die Gitterstruktur kann durch Drähte oder Streckmetall gebildet sein. In die Öffnungen des Gitternetzes kann der Verbundwerkstoff zur Verbesserung des Formschlusses eindringen.

Gemäß einem Ausführungsbeispiel wird vorgeschlagen, dass der Flachleiter aus Vollmaterial, insbesondere aus einem Kupferwerkstoff und/oder einem Aluminiumwerkstoff gebildet ist. Im Gegensatz zu Litzenleitern oder Gewebeleitern ist der Flachleiter gegenständlich bevorzugt aus einem Vollmaterial gebildet. Das Vollmaterial kann ein Kupferwerkstoff sein, insbesondere reines Kupfer oder eine Kupferlegierung. Auch ein Aluminiumwerkstoff, beispielsweise Al99,5 oder eine andere Aluminiumlegierung kann als Werkstoff für den Flachleiter genutzt werden.

GeDie Faserschichten sind aus Faserverbundwerkstoff mit Fasern und einer Matrix aus einem Verbundmaterial gebildet sind. Die Fasern können dabei insbesondere Glasfasern, Kohlstofffasern, Keramikfasern, Aramidfasern, Bohrfasern, Basaltfasern, Naturfasern und/oder Nylonfasern sein. Die Fasern können dabei in ihrer Faserrichtung regelmäßig oder unregelmäßig gelegt sein.

Dass die Fasern und/oder Faserschichten miteinander verbindenden Verbundmaterial kann insbesondere ein Polymer, insbesondere ein Duroplast, ein Kunstharz, ein Elastomer und/oder ein Thermoplast sein. Die Faserschichten werden mit dem Verbundmaterial getränkt, welches anschließend aushärtet und somit eine stabile Struktur bildet. Hierbei wird gegenständlich zwischen zwei Faserschichten der Flachleiter eingelegt und ebenfalls, gleichzeitig mit den Faserschichten mit dem Verbundmaterial getränkt, so dass die Matrix des Verbundmaterials sowohl die Faserschichten als auch den Flachleiter bevorzugt vollständig umschließt.

Zur Formgebung ist es möglich, dass die Faserschichten, bevor Sie mit dem Verbundmaterial getränkt wurden und/oder bevor das Verbundmaterial ausgehärtet ist, mittels Pressen oder Ziehen geformt werden. Während dieses Formgebungsprozesses kann gleichzeitig der Flachleiter mitgeformt werden. Hierzu wird vorgeschlagen, dass der Flachleiter insbesondere aus einem weichgeglühten Aluminiummaterial gebildet ist, um sich besonders leicht Formen zu lassen. Bevorzugt wird das Formen mittels Biegen, Pressen oder Ziehen durchgeführt, wobei besonders bevorzugt der Flachleiter zusammen mit den Faserschichten tiefgezogen ist. Nach dem Tiefziehen kann der Verbund aus Faserschicht und Flachleiter mit dem Verbundmaterial getränkt werden, welches aushärtet und das Strukturelement die tiefgezogene Struktur dauerhaft einnimmt. Auch kann das Tiefziehen nach dem Tränken und vor dem Aushärten des Verbundmaterials erfolgen.

Gemäß einem Ausführungsbeispiel wird vorgeschlagen, dass der Flachleiter in zumindest einer elektrisch geschlossenen Leiterschleife in dem Strukturelement gebildet ist. Durch die neuartigen, aufgrund des Faserverbundwerkstoffes notwendigen elektrischen Versorgungskonzepte hat sich herausgestellt, dass ein umlaufender Ringleiter besonders sinnvoll ist. Daher wird vorgeschlagen, dass in einem Strukturelement zumindest ein Flachleiter eine geschlossene Leiterschleife bildet. Dies hat den Vorteil, dass die Leiterschleife zum Einen eine erhöhte Stromtragfähigkeit gegenüber einem Einzelleiter hat und zum Anderen eine erhöhte Redundanz. Zwischen jeweils zwei Anschlusspunkten an der Leiterschleife verlaufen zwei elektrische Pfade über die einerseits jeweils in etwa hälftig der Gesamtstrom geführt wird und die andererseits bei Ausfall eines Pfades die Stromführung dieses ausgefallenen Pfades übernehmen können.

Ein Strukturelement kann beispielsweise ein Rahmenteil oder eine Bodengruppe sein. Durch den Flachleiter, welcher sich bevorzugt entlang einer gesamten Länge des Strukturelements erstreckt, wird eine Potenzialverteilung über das gesamte Fahrzeug, insbesondere vom Motorraum bis ins Heck ermöglicht.

Gemäß einem Ausführungsbeispiel wird vorgeschlagen, dass an dem Flachleiter zumindest eine Anschlusskonsole gebildet ist und dass die Anschlusskonsole aus dem Faserverbundwerkstoff herausgeführt ist. Die Anschlusskonsole ist insbesondere eine Anschlussfahne, die aus einem elektrisch leitenden Werkstoff, beispielsweise einem Kupferwerkstoff oder einem Aluminiumwerkstoff oder auch bimetallisch gebildet ist. Insbesondere eine bimetallische Anschlusskonsole, jedoch auch jede andere Anschlusskonsole kann stoffschlüssig mit dem Flachleiter verbunden sein, beispielsweise mittels Schweißen, insbesondere mittels Reibschweißen, Ultraschallschweißen oder Widerstandsschweißen. Die Anschlusskonsole kann eine Abgangsrichtung quer zur Längsrichtung des Flachleiters, insbesondere senkrecht zur Längsrichtung des Flachleiters haben. Die Anschlusskonsole kann ein Flachteil sein. Im Falle einer metallischen Anschlusskonsole kann ein erstes Ende der Anschlusskonsole aus dem Werkstoff des Flachleiters gebildet sein, ein zweites Ende der Anschlusskonsole, welches aus dem Verbundwerkstoff herausgeführt ist aus einem davon verschiedenen Werkstoff gebildet sein. Ein erster Werkstoff der Anschlusskonsole kann ein Aluminiumwerkstoff sein und ein zweiter Werkstoff der Anschlusskonsole kann ein Kupferwerkstoff sein. Ein erster Werkstoff der Anschlusskonsole kann ein Kupferwerkstoff sein und ein zweiter Werkstoff der Anschlusskonsole kann ein Aluminiumwerkstoff sein. Insbesondere wenn ein Kupferwerkstoff aus dem Verbundwerkstoff herausgeführt ist, kann daran unmittelbar beispielsweise eine Kupfer-Litzen-Leitung, insbesondere eine flexible Kupfer-Litzen-Leitung angeschlossen werden. Dies kann insbesondere zum Anschluss des Flachleiters an einen Batteriepol sinnvoll sein. Somit kann eine Batteriepolklemme über ein flexibles Kupferkabel mit der Anschlusskonsole verbunden werden. Dabei kann das flexible Kupferkabel bzw. der Leiter des Kabels an der Anschlusskonsole angelötet, angeschweißt, vercrimpt oder angeschraubt werden.

Gemäß einem Ausführungsbeispiel wird vorgeschlagen, dass an dem Flachleiter eine Anzahl an Anschlusskonsolen angeordnet ist. Die Anschlusskonsolen können voneinander beabstandet entlang des Flachleiters mit einem regelmäßigen oder einem unregelmäßigen Abstand angeordnet sein. Die Anschlusskonsolen können in eine gleiche Richtung und/oder in unterschiedliche Richtungen von dem Flachleiter abzweigen. Insbesondere kann die Anzahl der tatsächlichen Anschlüsse an dem Flachleiter geringer sein als die Anzahl der Anschlusskonsolen. Somit sind im montierten Zustand einige der Anschlusskonsolen frei von einem elektrischen Anschluss. Dies hat den Vorteil, dass eine einzige Konfiguration des Flachleiters mit einer Anzahl von Anschlusskonsolen für eine Vielzahl von elektrischen Konfigurationen von Fahrzeugen nutzbar ist. So können verschiedenste Komfortverbraucher an verschiedensten Anschlusskonsolen entlang des Strukturelementes, je nach Ausstattungsvariante des Fahrzeugs, mit dem Flachleiter verbunden werden. Dies erhöht die Flexibilität des Flachleiters erheblich und reduziert die Kosten eines Flachleiters aufgrund der hohen Stückzahl einer einzigen Konfiguration gegenüber individuellen Konfigurationen.

Gemäß einem Ausführungsbeispiel wird vorgeschlagen, dass zumindest zwei zueinander isolierte Flachleiter in den Faserverbundwerkstoff geführt sind. Insbesondere können die Flachleiter nebeneinander oder übereinander mit 2 bis 10 Faserschichten zwischen den Flachleitern geführt sein. Auch kann es ausreichend sein, dass ausschließlich das Verbundmaterial die Flachleiter gegeneinander isoliert, sodass keine Faserschicht zwischen den Flachleitern liegt. Mit Hilfe der mehreren isolierten Flachleitern kann entweder ein Mehrspannungsbordnetz mit verschiedenen Spannungsniveaus und/oder ein Batteriepluspol als auch ein Batterieminuspol als Masseleitung in dem Strukturelement geführt sein. An den jeweiligen Flachleitern können die Anschlusskonsolen wie oben beschrieben angeordnet sein.

Gemäß einem Ausführungsbeispiel wird vorgeschlagen, dass ein erster Flachleiter über eine Anschlusskonsole mit einem ersten flexiblen Kabel elektrisch verbunden ist und dass ein zweiter Flachleiter über eine Anschlusskonsole mit einem zweiten flexiblen Kabel elektrisch verbunden ist. Die Verbindung mit dem flexiblen Kabel kann wie oben beschrieben erfolgen. Mit Hilfe der flexiblen Kabel kann ein erster Flachleiter beispielsweise an einen ersten Batteriepol und ein zweiter Flachleiter an einen zweiten Batteriepol angeschlossen werden. Hierzu kann an den flexiblen Kabeln eine Batteriepolklemme angeordnet sein.

Gemäß einem Ausführungsbeispiel wird vorgeschlagen, dass zumindest ein flexibles Kabel mit einem Pol einer Batterie verbunden ist, insbesondere dass ein flexibles Kabel über eine Batteriepolklemme mit der Batterie verbunden ist.

Gemäß einem Ausführungsbeispiel wird vorgeschlagen, dass zumindest zwei Flachleiter abschnittsweise einander überlappen und im Bereich der Überlappung elektrisch miteinander verbunden sind, insbesondere über formschlüssige und/oder stoffschlüssige Verbindungen. Durch die Überlappung und Verbindung an den Überlappungsbereichen kann eine gitterartige Vernetzung der Flachleiter innerhalb des Strukturelementes erfolgen, was die Redundanz und Stromtragfähigkeit insgesamt erhöht.

Gemäß einem Ausführungsbeispiel wird vorgeschlagen, dass das Strukturelement zumindest Teil eines Vorderachsmoduls und/oder einer Fahrgastzelle ist. In diesem Fall kann beispielsweise der Flachleiter über das Vorderachsmodul und die Fahrgastzelle über die gesamte Länge eines Fahrzeugs verlaufen. Auch ist es möglich, dass ein erstes Strukturelement ein Vorderachsmodul ist und ein zweites Strukturelement eine Fahrgastzelle und in jeweils diesem Strukturelement zumindest ein zuvor beschriebener Flachleiter in der zuvor beschriebenen Art geführt ist. An der Schnittstelle zwischen den beiden Strukturelementen kann über zumindest eine Anschlusskonsole eine elektrische Verbindung zwischen den Flachleitern hergestellt werden. Somit können die Flachleiter von Strukturelement zu Strukturelement miteinander verbunden sein, sodass sich ein miteinander verbundenes Leiternetz entlang des gesamten Fahrzeugs über die verschiedenen Strukturelemente erstreckt.

Dies ist insbesondere der Fall, wenn der Flachleiter aus dem Strukturelement raus geführt ist und in einen Hinterwagenbereich ragt. Ein Hinterwagenbereich kann als Strukturelement oder auch als Tragrahmen gebildet sein. Somit kann die elektrische Verbindung beispielsweise aus der Fahrgastzelle hinaus in den Hinterwagenbereich geführt werden.

Ein weiterer Aspekt ist ein Verfahren nach Anspruch 18.

Hierbei wird insbesondere vorgeschlagen, dass bevor die Verbindung der Schichten erfolgt, Flachleiter und Faserschichten geformt werden, insbesondere gezogen, gepresst oder tiefgezogen werden und erst anschließend das Verbundmaterial aufgebracht wird, um so die Schichten zu einem Laminat zusammen zu führen.

Nachfolgend wird der Gegenstand anhand einer Ausführungsbeispiele zeigenden Zeichnung näher erläutert. In der Zeichnung zeigen:
- Fig. 1a-d: verschieden Oberflächenstrukturen von Flachleitern gemäß Ausführungsbespielen;
- Fig. 2a: einen Querschnitt durch ein Strukturelement mit einem Faserverbund und einem Flachleiter mit einer zweiten Reliefstruktur;
- Fig. 2b: einen Querschnitt durch ein Strukturelement mit einem Faserverbund und einem Flachleiter mit einer dritten Reliefstruktur;
- Fig. 2c: einen Querschnitt durch ein Strukturelement mit einem Faserverbund und einem Flachleiter mit einer ersten Reliefstruktur;
- Fig. 3a-b: ein Flachleiter mit einer gitterförmigen Oberflächenstruktur;
- Fig. 4a-d: einen Flachleiter mit verschiedenen gitterförmigen Strukturen;
- Fig. 5: Strukturelemente mit Flachleitern und Faserverbundwerkstoffen;
- Fig. 6a-b: ein Strukturelement mit einem Faserverbund und Flachleitern;
- Fig. 7: verschiedene Anschlusskonsolen an Flachleitern

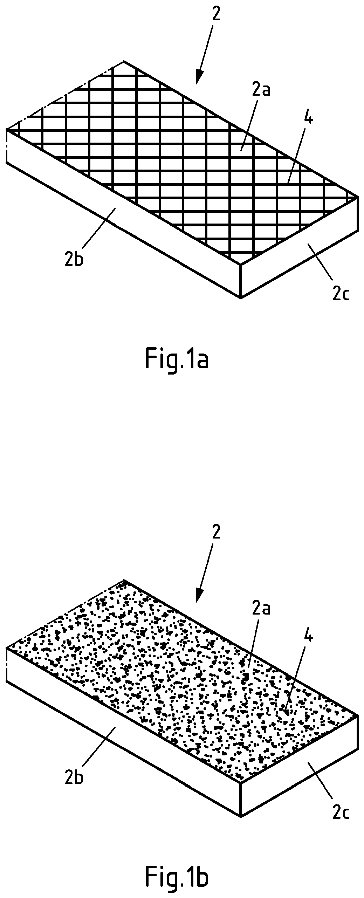

Fig. 1a zeigt einen Flachleiter 2, welcher aus einer der oben genannten Werkstoffe gebildet sein kann. Der Flachleiter 2 hat einen rechteckigen Querschnitt und zwei breite Oberflächen 2a sowie zwei schmale Oberflächen 2b als auch zwei Stirnflächen 2c.

An zumindest einer der Oberflächen 2a, b kann eine Reliefstruktur 4, wie sie in Fig. 1a auf der Oberfläche 2a ist, eingeprägt werden. Die in der Fig. 1a vorgesehene Oberflächenstruktur ist eine Gitterstruktur und regelmäßig.

Fig. 1b zeigt ein weiteres Ausführungsbeispiel, bei dem die Oberflächenstruktur 4 auf der Oberfläche 2a unregelmäßig ist, beispielsweise durch Einbringen einer erhöhten Rauheit.

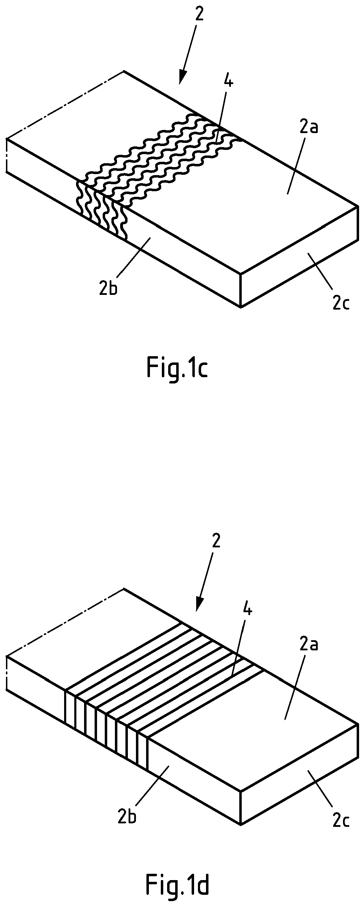

Fig. 1c zeigt ein weiteres Beispiel eines Flachleiters 2, bei dem auf den Oberflächen 2a als auch 2b jeweils eine wellenförmige, gleichmäßige Reliefstruktur auf der Oberfläche 4 aufgebracht ist.

Fig. 1d zeigt ein weiteres Ausführungsbeispiel eines Flachleiters 2, bei dem eine streifenförmige Reliefstruktur 4 aufgebracht ist.

Die Reliefstruktur 4 kann entweder durchgängig entlang einer Längsachse auf einer, zwei, drei oder vier Oberflächen 2a, 2b aufgebracht sein oder es können Bereiche mit einer Reliefstruktur durch Bereiche ohne Reliefstruktur voneinander beabstandet sein.

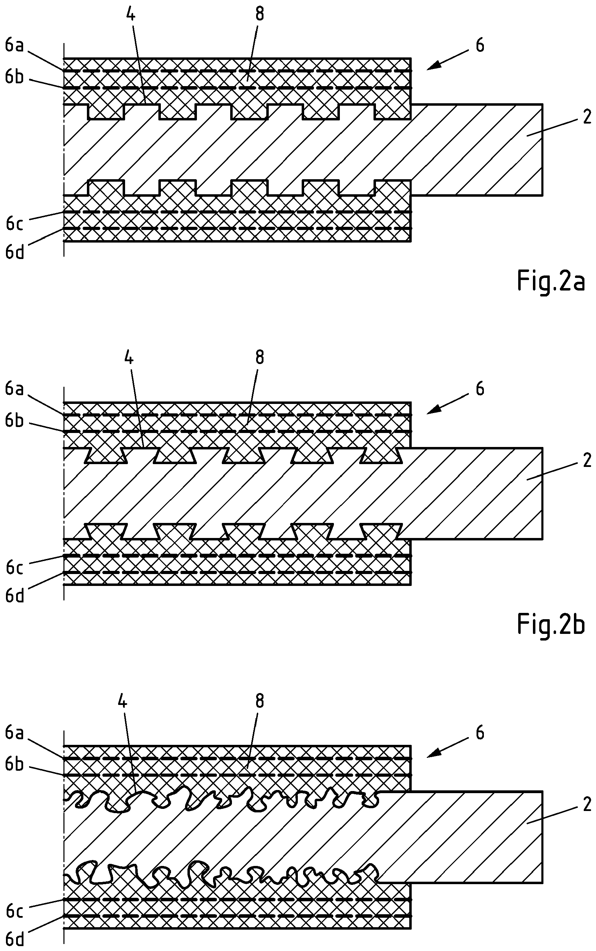

Fig. 2a zeigt einen Querschnitt (stark vereinfacht) durch einen Flachleiter 2 gemäß Fig. 1d in einem Faserverbund. Der Flachleiter 2 ist in einen Faserverbund 6 eingebunden. Der Faserverbund 6 ist gebildet aus Faserschichten 6a-d, die übereinander geschichtet sind. Zwischen zwei Faserschichten 6b, c ist der Flachleiter mit in die Verbundstruktur eingebracht. Zwischen den Faserschichten 6a - d der Verbundstruktur 6 ist eine Matrix aus einem Verbundwerkstoff 8 eingebracht. Zu erkennen ist, dass der Verbundwerkstoff 8 nicht nur zwischen den Faserschichten 6a-d eingebracht ist, sondern bis in die Reliefstruktur der Oberfläche des Flachleiters 2 eindringt. Nach dem Aushärten des Verbundwerkstoffes 8 ist das Laminat aus den Faserschichten 6a-d und dem Flachleiter 2 durch den Verbundwerkstoff 8 verbunden. Durch die Erhebungen und Vertiefungen in der Oberfläche der Reliefstruktur 4 ergibt sich ein erheblich verbesserter Formschluss zwischen dem Faserverbund 6 und dem Flachleiter 2, so dass einer Delaminierung entgegen gewirkt wird.

Fig. 2b zeigt einen Flachleiter 2 mit einer Reliefstruktur, die Hinterschnitte aufweist. Zu erkennen ist, dass die Hinterschnitte die Oberfläche des Flachleiters, die an den Faserverbund 6 angrenzt, hinterschneiden. Der Verbundwerkstoff kann, solange er flüssig ist, in diese Hinterschnitte eindringen. Wenn der Verbundwerkstoff 8 ausgehärtet ist, ist er mit den Hinterschnitten verzahnt, so dass der Faserverbund 6 formschlüssig an dem Flachleiter 2 gehalten ist.

Fig. 2c zeigt eine weitere mögliche Reliefstruktur. Hierbei ist die Oberfläche des Flachleiters mit einer Eindringtiefe bis z.B. 10mm, bevorzugt auch 20mm, insbesondere weniger als 20% der Gesamtdicke des Flachleiters 2 porös. Die Porosität ist eine offene Porosität mit einer Porengröße von mehr als 50nm. Die Porosität beträgt dabei zwischen 10% und 40%, bevorzugt weniger als 50%, insbesondere weniger als 40% oder weniger als 30%. Die Porosität beträgt dabei bevorzugt mehr als 5% oder 10%. Die Poren bilden die Hinterschnitte der Reliefstruktur, in die das Verbundmaterial 8 eindringen kann.

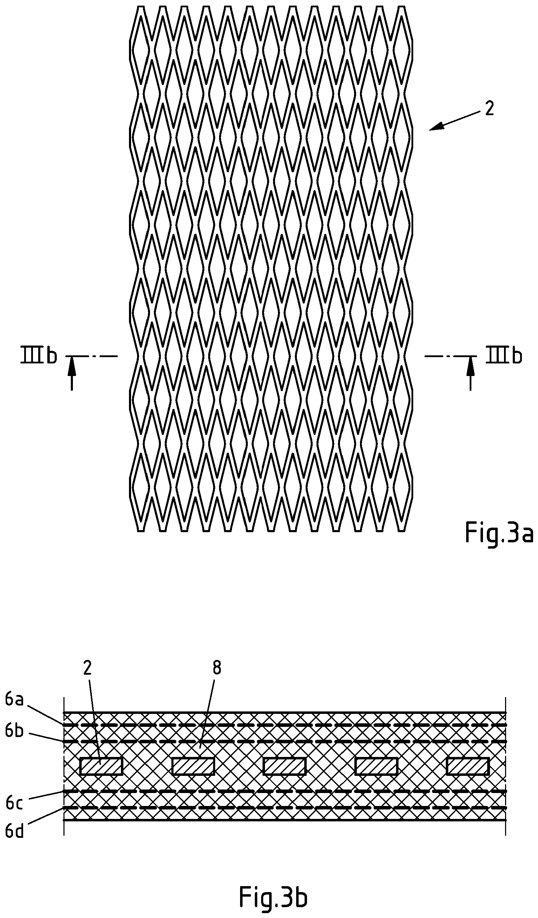

Fig. 3a zeigt einen weiteren Flachleiter 2, der gitterförmig ist und Durchbrechungen aufweist. Entlang des Schnittes IIIb, welcher in 3b gezeigt ist, ist zu erkennen, dass der Verbundwerkstoff 8 in die Gitterstruktur eindringt und sich zwischen die Stege des Flachleiters 2 legt. Nach dem Aushärten des Verbundwerkstoffes 8 ist auch hier eine sehr gute Verbindung durch Formschluss zwischen den Faserschichten 6a-d und dem Flachleiter 2 gegeben.

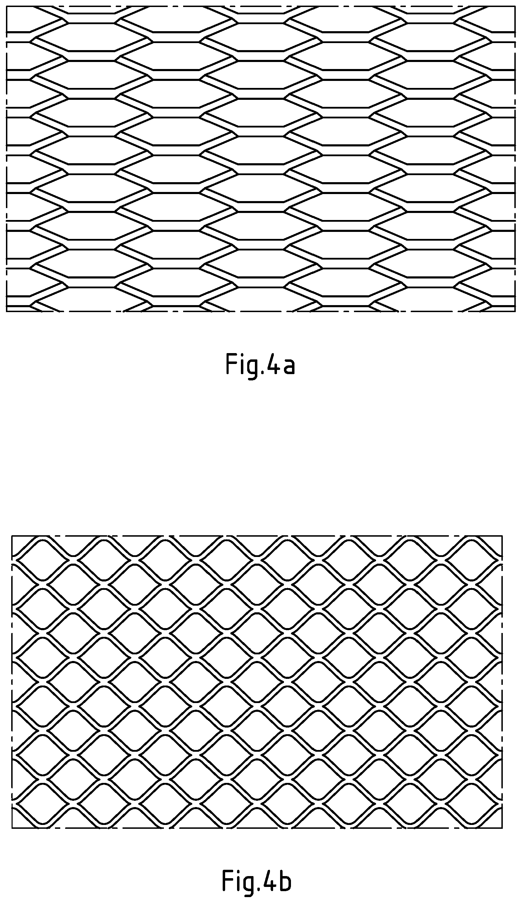

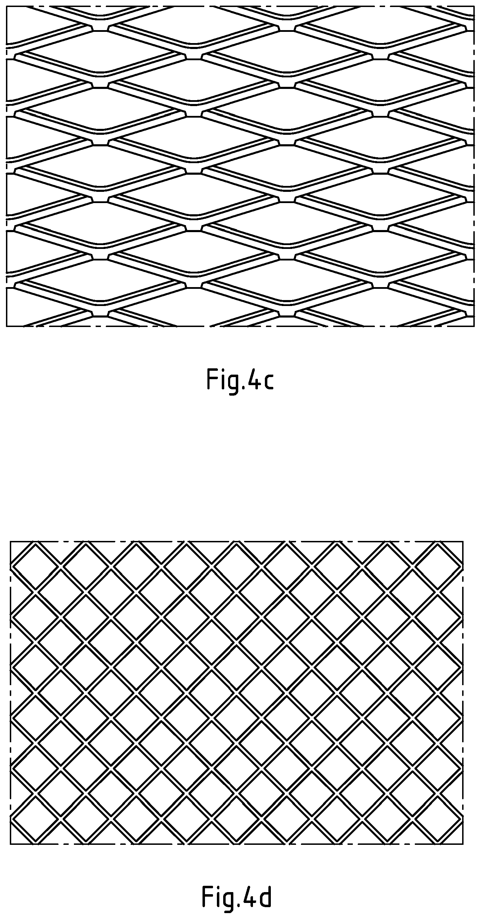

Die Fig. 4a-d zeigen verschiedenartige Gitternetzstrukturen, wobei in der Fig. 4a eine sechseckige Gitterstruktur gezeigt ist, in der Fig. 4b eine erste rautenförmige Gitterstruktur, in der Fig. 4c eine grobe rautenförmige Gitterstruktur und in der Fig. 4d eine quadratische Gitterstruktur mit jeweils Durchbrechungen und Stegen des Flachleiter 2. Diese und andere Gitterstrukturen eignen sich zur Bildung des Strukturelementes gemäß des Gegenstandes. Die Gitterstrukturen können aus Streckmetall oder Drähten gebildet sein.

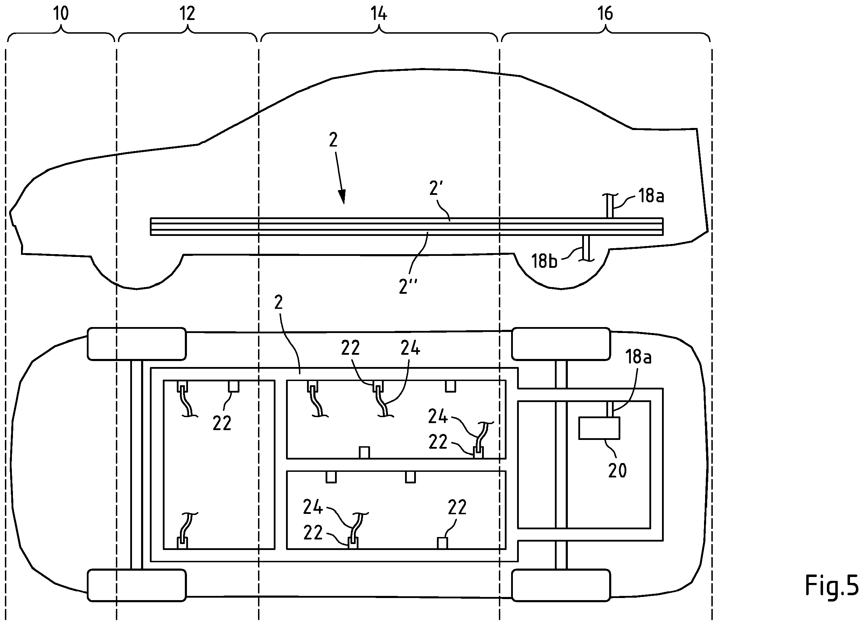

Fig. 5 zeigt schematisch den Aufbau eines Kraftfahrzeugs mit verschiedenen Strukturelementen. Das Kraftfahrzeug weist eine Crashstruktur 10, ein Vorderachsmodul 12, eine Fahrgastzelle 14 sowie einen Hinterwagen 16 auf. Insbesondere die Strukturelemente in den Bereichen 12, 14, 16 können aus einem Faserverbundwerkstoff gebildet sein. In einem oder mehreren Strukturelementen in den Bereichen 12-16 kann ein Flachleiter 2 entweder als eine Schicht oder mehrschichtig mit zwei Flachleiterschichten 2', 2" eingebracht sein. Die beiden Flachleiterschichten 2', 2" können gegeneinander durch zumindest das Verbundmaterial, insbesondere jedoch auch durch zumindest eine Faserschicht gegeneinander elektrisch isoliert sein. An den Flachleiterschichten 2', 2" können beispielsweise im Bereich des Hinterwagens 16 elektrische Anschlüsse 18a, 18b vorgesehen sein. Diese elektrischen Anschlüsse können durch flexible Leitungen gebildet sein, die mit einer Kraftfahrzeugbatterie 20 beispielsweise jeweils einem Pol der Batterien 20 verbunden sind.

In jedem der Bereiche 12, 14 kann ein Strukturelement mit einem Flachleiter 2 in sich abgeschlossen sein und an den Übergängen zwischen den Bereichen 12-16 können die jeweiligen Flachleiter 2 aus dem Verbundmaterial herausgeführt sein und miteinander kurzgeschlossen sein.

An einem oder mehrerer der Flachleiterschichten 2', 2" können Anschlusskonsolen 22 vorgesehen sein. Die Anschlusskonsolen 22 können bedarfsweise mit elektrischen Leitern 24 bestückt sein, entsprechend der jeweiligen Anforderung einer Ausstattungsvariante. Die Anzahl der Anschlusskonsolen 22 kann größer sein, als die tatsächliche Anzahl der angeschlossenen elektrischen Leitung 24, um verschiedenen Anforderungsvarianten Rechnung zu tragen.

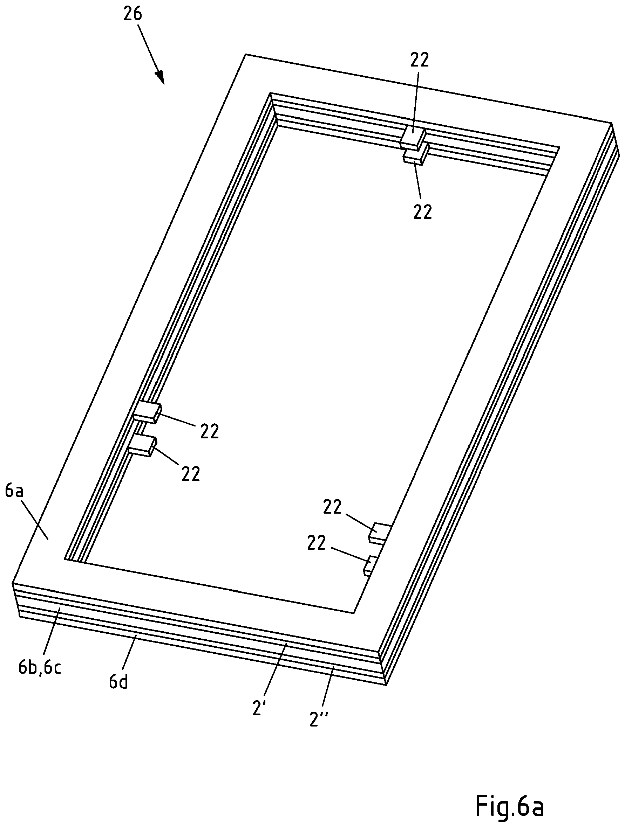

Fig. 6a zeigt ein Strukturelement, beispielsweise einen Rahmen 26 mit 5 Schichten, wobei zwei Flachleiterschichten 2', 2" zwischen jeweils Faserschichten 6a-d angeordnet sind. Jede der Flachleiterschichten 2', 2" kann zumindest eine Anschlusskonsole 22 aufweisen.

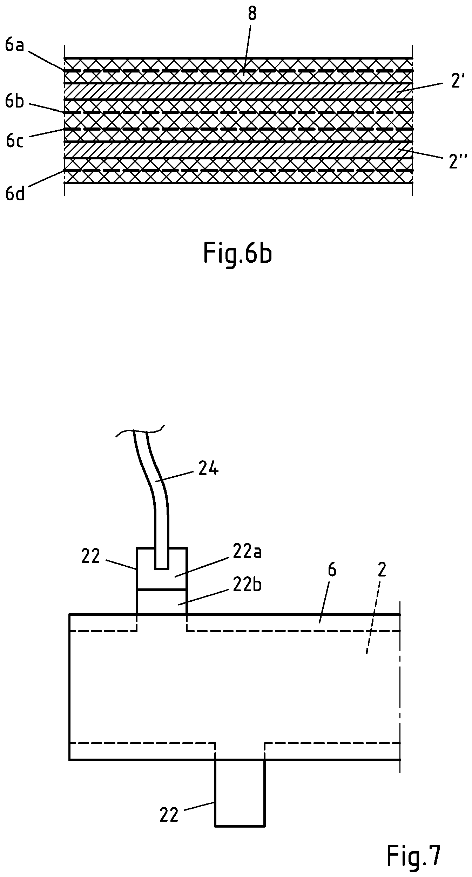

Die Anordnung des Flachleiters bzw. der Flachleiterschichten 2', 2" in dem Faserverbund ist nochmals in der Fig. 6b dargestellt. Zwischen den Faserschichten 6a-d und einem Verbundmaterial 8 können die Flachleiterschichten 2', 2" eingebunden sein.

Fig. 7 zeigt einen Flachleiter 2 in einer Verbundschicht 6 mit zwei Anschlusskonsolen 22, welche quer zur Längsachse des Flachleiters 2 von dem Flachleiter 2 abzweigen. Eine Anschlusskonsole 22 kann bimetallisch mit einem ersten Werkstoff 22a und einem zweiten Werkstoff 22b gebildet sein. Dabei kann beispielsweise der Werkstoff 22b, der mit dem Flachleiter 2 beispielsweise stoffschlüssig verbunden ist aus dem gleichen Werkstoff wie der Flachleiter 2 gebildet sein und der Bereich 22a aus einem hiervon verschiedenen Metallwerkstoff. Beispielsweise kann der Metallwerkstoff des Bereichs 22b ein Aluminiumwerkstoff sein und der Bereich des Werkstoffs 22a ein Kupferwerkstoff. An den Kupferwerkstoff im Bereich 22a lässt sich so sehr leicht ein elektrisches Kabel 24 beispielsweise aus Aluminium mittels Löten, Krimpen oder dergleichen anschließen.

### Bezugszeichenliste

- 2: Flachleiter
- 2', 2": Schichten
- 2a-c: Oberflächen
- 4: Reliefstruktur
- 6: Faserverbund
- 6a-d: Faserschichten
- 8: Verbundmaterial
- 10: Crashstruktur
- 12: Vorderachsmodul
- 14: Fahrgastzelle
- 16: Hinterwagen
- 18a, b: Batterieleitungen
- 20: Kraftfahrzeugbatterie
- 22: Anschlusskonsole
- 24: flexible Leitung
- 26: Rahmenstruktur

## Patentansprüche

1. Kraftfahrzeugstrukturelement mit
- zumindest einer ersten und einer zweiten, einen starren Faserverbund (6) bildenden Faserschicht (6a-d), wobei die Faserschichten (6a-d) miteinander zumindest abschnittsweise laminiert sind, wobei der Faserverbund (6) aus Faserschichten (6a-d) und einer Matrix aus einem Verbundmaterial gebildet ist, und
- zumindest einem zwischen den Faserschichten (6a-d) angeordneten, mit den Faserschichten (6a-d) laminierten elektrischen Flachleiter, wobei
- der Flachleiter (2) auf zumindest einer zumindest einer Faserschicht (6a-d) zugewandten Oberfläche (2a-c) eine Reliefstruktur (4) aufweist
**dadurch gekennzeichnet,**
- **dass** der Flachleiter mit dem Verbundmaterial durch die Reliefstruktur formschlüssig verbunden ist.

2. Kraftfahrzeugstrukturelement nach Anspruch 1,
**dadurch gekennzeichnet,**
- **dass** die Reliefstruktur (4) Hinterschnitte in der der Faserschicht (6a-d) zugewandten Oberfläche (2a-c) bildet und/oder dass die Reliefstruktur (4) regelmäßig oder unregelmäßig ist und/oder die Reliefstruktur (4) eine Oberflächenporosität des Flachleiters (2) zwischen 10% und 50% hat.

3. Kraftfahrzeugstrukturelement nach Anspruch 1 oder 2,
**dadurch gekennzeichnet,**
- **dass** die Reliefstruktur (4) aus Vorsprüngen und/oder Rücksprüngen gebildet ist oder dass die Reliefstruktur (4) aus den Flachleiter (2) durchbrechenden Ausnehmungen gebildet ist, und/oder
- **dass** der Flachleiter als Gitternetz gebildet ist.

4. Kraftfahrzeugstrukturelement nach einem der vorangehenden Ansprüche,
**dadurch gekennzeichnet,**
- **dass** der Flachleiter (2) aus Vollmaterial, insbesondere aus einem Kupferwerkstoff und/oder Aluminiumwerkstoff gebildet ist.

5. Kraftfahrzeugstrukturelement nach einem der vorangehenden Ansprüche,
**dadurch gekennzeichnet,**
- **dass** die Faserschichten (6a-d) aus Glasfasern, Kohlenstofffasern, Keramikfasern, Aramidfasern, Borfasern, Basaltfasern, Naturfasern, Nylonfasern gebildet sind und/oder wobei das Verbundmaterial (8) aus einem Polymer, insbesondere einem Duroplast, Kunstharz, Elastomer, und/oder Thermoplast gebildet ist.

6. Kraftfahrzeugstrukturelement nach einem der vorangehenden Ansprüche,
**dadurch gekennzeichnet,**
- **dass** der Flachleiter (2) zusammen mit den Faserschichten (6a-d) tiefgezogen ist.

7. Kraftfahrzeugstrukturelement nach einem der vorangehenden Ansprüche,
**dadurch gekennzeichnet,**
- **dass** der Flachleiter (2) in zumindest einer elektrisch geschlossenen Leiterschleife in dem Strukturelement gebildet ist.

8. Kraftfahrzeugstrukturelement nach einem der vorangehenden Ansprüche,
**dadurch gekennzeichnet,**
- **dass** sich der Flachleiter (2) entlang einer gesamten Länge des Strukturelements erstreckt.

9. Kraftfahrzeugstrukturelement nach einem der vorangehenden Ansprüche,
**dadurch gekennzeichnet,**
- **dass** an dem Flachleiter (2) zumindest eine Anschlusskonsole (22) gebildet ist und dass die Anschlusskonsole (22) aus dem Faserverbund (6) heraus geführt ist, insbesondere
- **dass** an dem Flachleiter (2) eine Anzahl an Anschlusskonsolen (22) angeordnet ist, die die Anzahl der tatsächlichen elektrischen Anschlüsse an dem Flachleiter (2) übersteigt, so dass im montierten Zustand zumindest eine Anschlusskonsole (22) frei von einem elektrischen Anschluss ist.

10. Kraftfahrzeugstrukturelement nach einem der vorangehenden Ansprüche,
**dadurch gekennzeichnet,**
- **dass** zumindest zwei zueinander isolierte Flachleiter (2) in dem Faserverbund (6) geführt sind, und/oder
- **dass** ein erster Flachleiter (2) über eine Anschlusskonsole (22) mit einem ersten flexiblen Kabel elektrisch verbunden ist und dass ein zweiter Flachleiter (2) über eine Anschlusskonsole (22) mit einem zweiten flexiblen Kabel elektrisch verbunden ist.

11. Kraftfahrzeugstrukturelement nach einem der vorangehenden Ansprüche,
**dadurch gekennzeichnet,**
- **dass** zumindest ein flexibles Kabel mit einem Pol einer Batterie verbunden ist, insbesondere dass ein flexibles Kabel über eine Batteriepolklemme (20) mit der Batterie verbunden ist.

12. Kraftfahrzeugstrukturelement nach einem der vorangehenden Ansprüche,
**dadurch gekennzeichnet,**
- **dass** zumindest zwei Flachleiter (2) abschnittsweise einander überlappen und im Bereich der Überlappung elektrisch miteinander verbunden sind, insbesondere über formschlüssig oder einen stoffschlüssig.

13. Kraftfahrzeugstrukturelement nach einem der vorangehenden Ansprüche,
**dadurch gekennzeichnet,**
- **dass** das Strukturelement zumindest Teil eines Vorderachsmodul (12) und/oder einer Fahrgastzelle (14) ist, und/oder
- **dass** zumindest ein Flachleiter (2) aus dem Strukturelement heraus geführt ist und in einen Hinterwagenbereich ragt.

14. Verfahren zum Herstellen eines Strukturelements, insbesondere nach einem der vorangehenden Ansprüche, mit den Schritten
- Bereitstellen einer ersten Faserschicht (6a),
- Auflegen eines Flachleiters (2) mit einer Oberfläche (2a-c) mit einer Reliefstruktur auf die erste Faserschicht (6a),
- Bereitstellen einer zweiten Faserschicht (6b),
- Laminieren der ersten Faserschicht (6a), der zweiten Faserschicht (6b) und dem Flachleiter (2) mit einer Matrix aus einem Verbundmaterial (8) derart, dass der Flachleiter mit dem Verbundmaterial durch die Reliefstruktur formschlüssig verbunden wird.

15. Verfahren nach Anspruch 14,
**dadurch gekennzeichnet,**
- **dass** die erste Faserschicht (6a), der Flachleiter (2) und die zweite Faserschicht (6b) geformt werden, insbesondere gezogen oder gepresst, insbesondere tiefgezogen werden und anschließend die geformten Schichten (2', 2") mit dem Verbundmaterial (8) beschichtet werden, so dass die Schichten (2', 2") ein Laminat bilden.

## Claims

1. Motor vehicle structural element with
- at least a first and a second fibre layer (6a-d) forming a rigid fibre composite (6), wherein the fibre layers (6a-d) are laminated to one another at least in sections, wherein the fibre composite (6) is formed from fibre layers (6a-d) and a matrix of a composite material, and
- at least one electrical flat conductor arranged between the fibre layers (6a-d) and laminated with the fibre layers (6a-d), wherein
- the flat conductor (2) has a relief structure (4) on at least one surface facing at least one fibre layer,
**characterized in that**
- the flat conductor is connected to the composite material via the relief structure in a form-fit.

2. Motor vehicle structural element according to claim 1,
**characterized in that**
- the relief structure (4) forms undercuts in the surface (2a-c) facing the fibre layer (6a-d) and/or **in that** the relief structure (4) is regular or irregular and/or the relief structure (4) has a surface porosity of the flat conductor (2) of between 10% and 50%.

3. Motor vehicle structural element according to claim 1 or 2,
**characterized in that**
- the relief structure (4) is formed from protrusions and/or recesses, or **in that** the relief structure (4) is formed from recesses which penetrate through the flat conductor (2) and/or
- the flat conductor is formed as a grid.

4. Motor vehicle structural element according to one of the preceding claims,
**characterized in that**
- the flat conductor (2) is formed from solid material, in particular from a copper material and/or aluminium material.

5. Motor vehicle structural element according to one of the preceding claims, **characterized in that**
- the fibre layers (6a-d) are formed from glass fibres, carbon fibres, ceramic fibres, aramid fibres, boron fibres, basalt fibres, natural fibres, nylon fibres, and/or **in that** the composite material (8) is formed from a polymer, in particular a duroplast, synthetic resin, elastomer, and/or thermoplastic.

6. Motor vehicle structural element according to one of the preceding claims, **characterized in that**
- the flat conductor (2) is deep-drawn together with the fibre layers (6a-d).

7. Motor vehicle structural element according to one of the preceding claims, **characterized in that**
- the flat conductor (2) is formed as at least one electrically closed conductor loop in the structural element.

8. Motor vehicle structural element according to one of the preceding claims, **characterized in that**
- the flat conductor (2) extends along an entire length of the structural element.

9. Motor vehicle structural element according to one of the preceding claims, **characterized in that**
- at least one connection console (22) is formed on the flat conductor (2), and **in that** the connection console (22) is routed out of the fibre composite in particular
- a number of connection consoles (22) is arranged on the flat conductor (2) which exceeds the number of actual electrical connections on the flat conductor (2), so that in the assembled state at least one connection console (22) is free of an electrical connection.

10. Motor vehicle structural element according to one of the preceding claims, **characterized in that**
- at least two mutually insulated flat conductors (2) are routed in the fibre composite (6) and/or
- a first flat conductor (2) is electrically connected to a first flexible cable via a connection console (22), and **in that** a second flat conductor (2) is electrically connected to a second flexible cable via a connection console (22).

11. Motor vehicle structural element according to one of the preceding claims, **characterized in that**
- at least one flexible cable is connected to a pole of a battery, in particular that a flexible cable is connected to the battery via a battery pole clamp.

12. Motor vehicle structural element according to one of the preceding claims, **characterized in that**
- at least two flat conductors (2) overlap one another in sections and are electrically connected to one another in the area of the overlap, in particular in a form-fit or a material-bond.

13. Motor vehicle structural element according to one of the preceding claims, **characterized in that**
- the structural element is at least part of a front axle module (12) and/or of a passenger compartment. (14) and/or
- at least one flat conductor (2) is routed out of the structural element and projects into a rear vehicle area.

14. Method of manufacturing a structural element, in particular according to one of the preceding claims, with the steps of
- providing a first fibre layer (6a),
- placing a flat conductor (2) with a surface (2a-c) with a relief structure onto the first fibre layer (6a),
- providing a second fibre layer (6b),
- laminating the first fibre layer (6a), the second fibre layer (6b), and the flat conductor (2) with a matrix of a composite material (8) in such a way that the flat conductor is connected to the composite material via the relief structure in a form-fit.

15. Method according to claim 14,
**characterized in that**
- the first fibre layer (6a), the flat conductor (2) and the second fibre layer (6b) are formed, in particular drawn or pressed, in particular deep-drawn, and subsequently the formed layers (2', 2") are laminated with the composite material (8) so that the layers (2', 2") form a laminate.

## Revendications

1. Élément structurel de véhicule automobile comprenant
- au moins une première et une deuxième couche de fibres (6a-d) formant un composite de fibres rigide (6), où les couches de fibres (6a-d) sont laminées entre elles au moins par tronçon, où le composite de fibres (6) est formé de couches de fibres (6a-d) et d'une matrice en un matériau composite, et
- au moins un conducteur électrique plat disposé entre les couches de fibres (6a-d) et laminé avec les couches de fibres (6a-d), où
- le conducteur plat (2) a une structure en relief (4) sur au moins une surface (2a-c) orientée vers au moins une couche de fibres (6a-d)
**caractérisé en ce que**
- le conducteur plat est relié au matériau composite par la structure en relief par liaison par forme.

2. Élément structurel de véhicule automobile selon la revendication 1,
**caractérisé en ce que**
- la structure en relief (4) forme des contre-dépouilles dans la surface (2a-c) orientée vers la couche de fibres (6a-d) et/ou que la structure en relief (4) est régulière ou irrégulière et/ou que la structure en relief (4) a une porosité de surface du conducteur plat (2) entre 10% et 50%.

3. Élément structurel de véhicule automobile selon la revendication 1 ou 2, **caractérisé en ce que**
- la structure en relief (4) est formée par des saillies et/ou des retraits ou que la structure en relief (4) est formée par des évidements traversant le conducteur plat (2), et/ou
- que le conducteur plat est formé comme un grille.

4. Élément structurel de véhicule automobile selon l'une des revendications précédentes,
**caractérisé en ce que**
- le conducteur plat (2) est formé d'un matériau massif, en particulier d'un matériau à base de cuivre et/ou d'un matériau à base d'aluminium.

5. Élément structurel de véhicule automobile selon l'une des revendications précédentes,
**caractérisé en ce que**
- les couches de fibres (6a-d) sont formées de fibres de verre, de fibres de carbone, de fibres de céramique, de fibres d'aramide, de fibres de bore, de fibres de basalte, de fibres naturelles, de fibres de nylon et/ou où le matériau composite (8) est formé d'un polymère, en particulier d'une résine thermodurcissable, d'une résine synthétique, d'un élastomère et/ou d'une matière thermoplastique.

6. Élément structurel de véhicule automobile selon l'une des revendications précédentes,
**caractérisé en ce que**
- le conducteur plat (2) est embouti avec les couches de fibres (6a-d).

7. Elément structurel de véhicule automobile selon l'une des revendications précédentes,
**caractérisé en ce que**
- le conducteur plat (2) est formé en forme d'au moins une boucle conductrice fermée électriquement dans l'élément structurel.

8. Élément structurel de véhicule automobile selon l'une des revendications précédentes,
**caractérisé en ce que**
- le conducteur plat (2) s'étend sur une longueur entier de l'élément structurel.

9. Élément d structurel de véhicule automobile selon l'une des revendications précédentes,
**caractérisé en ce que**
- au moins une console de raccordement (22) est formée sur le conducteur plat (2) et que la console de raccordement (22) est guidée hors du composite de fibres (6), en particulier
- qu'un nombre de consoles de raccordement (22) est disposé sur le conducteur plat (2) qui dépasse le nombre des raccordements électriques effectifs sur le conducteur plat (2), de sorte qu'à l'état installé, au moins une console de raccordement (22) est sans raccordement électrique.

10. Élément structurel de véhicule automobile selon l'une des revendications précédentes,
**caractérisé en ce que**
- au moins deux conducteurs plats (2) isolés l'un de l'autre sont guidés dans le composite de fibres (6), et/ou
- un premier conducteur plat (2) est relié électriquement à un premier câble flexible par l'intermédiaire d'une console de raccordement (22) et qu'un deuxième conducteur plat (2) est relié électriquement à un deuxième câble flexible par l'intermédiaire d'une console de raccordement (22).

11. Élément structurel de véhicule automobile selon l'une des revendications précédentes,
**caractérisé en ce que**
- au moins un câble flexible est relié à un pôle d'une batterie, en particulier qu'un câble flexible est relié à la batterie par l'intermédiaire d'une cosse de pôle de batterie (20).

12. Élément structurel de véhicule automobile selon l'une des revendications précédentes,
**caractérisé en ce que**
- au moins deux conducteurs plats (2) se chevauchent par tronçon et sont reliés électriquement l'un à l'autre dans la zone de chevauchement, en particulier par une liaison par forme ou une liaison par matière.

13. Élément structurel de véhicule automobile selon l'une des revendications précédentes,
**caractérisé en ce que**
- l'élément structurel fait au moins partie d'un module d'essieu avant (12) et/ou d'un habitacle (14), et/ou
- qu'au moins un conducteur plat (2) est guidé hors de l'élément structurel et pénètre dans une zone de la partie arrière de véhicule.

14. Procédé de fabrication d'un élément structurel, en particulier selon l'une des revendications précédentes, avec les étapes suivantes
- mise à disposition d'une première couche de fibres (6a),
- application d'un conducteur plat (2) avec une surface (2a-c) avec une structure en relief sur la première couche de fibres (6a),
- mise à disposition d'une deuxième couche de fibres (6b),
- lamination de la première couche de fibres (6a), de la deuxième couche de fibres (6b) et du conducteur plat (2) avec une matrice constituée d'un matériau composite (8) de telle sorte que le conducteur plat est relié au matériau composite par la structure en relief par liaison par forme.

15. Procédé selon la revendication 14,
**caractérisé en ce que**
- la première couche de fibres (6a), le conducteur plat (2) et la deuxième couche de fibres (6b) sont formés, en particulier tirés ou pressés, en particulier emboutis, et ensuite les couches formées (2', 2") sont recouvrées du matériau composite (8), de sorte que les couches (2', 2") forment un laminat.
